(19) Europäisches Patentamt
European Patent Office
Office européen des brevets

(11) Veröffentlichungsnummer: **0 176 921**
**A2**

(12) # EUROPÄISCHE PATENTANMELDUNG

(21) Anmeldenummer: **85112063.4**

(22) Anmeldetag: **24.09.85**

(51) Int. Cl.⁴: **C 25 B 3/00**
H 01 M 4/00, C 07 D 495/00

(30) Priorität: **29.09.84 DE 3435947**

(43) Veröffentlichungstag der Anmeldung:
**09.04.86 Patentblatt 86/15**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Koehler, Gernot, Dr.**
**Berner Weg 32**
**D-6700 Ludwigshafen(DE)**

(72) Erfinder: **Naarmann, Herbert, Dr.**
**Haardtblick 15**
**D-6719 Wattenheim(DE)**

(54) **Verfahren zur Herstellung von elektrisch leitfähigen Systemen.**

(57) Verfahren zur Herstellung von elektrisch leitfähigen Systemen, bei dem man Dithienobenzol in Gegenwart von Leitsalzen elektrochemisch oxidiert und die Oxidationsprodukte mit Elektronendonatoren umsetzt sowie die Verwendung derartiger leitfähiger Systeme zur Herstellung von elektrischen Leitern und von Elektroden.

EP 0 176 921 A2

Croydon Printing Company Ltd.

## Verfahren zur Herstellung von elektrisch leitfähigen Systemen

Die Erfindung betrifft ein Verfahren zur Herstellung von elektrisch leitfähigen Systemen, bei dem man Verbindungen mit Chinonstrukturen mit Elektronendonatoren umsetzt.

Es ist bekannt, daß bestimmte Chinone, wie Benzochinon oder Tetracyanobenzochinon, ausgezeichnete Elektronenakzeptoren sind, die mit bestimmten Elektronendonatoren, z.B. aromatischen Kohlenwasserstoffen wie Anthracen, umgesetzt werden können und so tieffarbige elektrisch leitfähige sogenannte Charge-Transfer-Komplexe (CT-Komplexe) bilden.

Der Erfindung liegt die Aufgabe zugrunde, ein weiteres Verfahren aufzuzeigen, das es in einfacher Weise gestattet, neue elektrisch leitfähige Systeme herzustellen.

Diese Aufgabe wird erfindungsgemäß dadurch gelöst, daß man Dithienobenzol in Gegenwart von Leitsalzen der elektrochemischen Oxidation unterwirft und die Oxidationsprodukte mit Elektronendonatoren umsetzt.

Ein weiterer Gegenstand der Erfindung ist die Verwendung derartig hergestellter elektrisch leitfähiger Systeme zur Herstellung von elektrischen Leitern und von Elektroden.

Unter elektrisch leitfähigen Systemen werden solche Strukturen mit Leitfähigkeitswerten von $>1 \cdot 10^{-3}$ S/cm verstanden, die sich in der Luftatmosphäre über einen längeren Zeitraum nicht zersetzen und stabil bleiben. Die elektrischen Leitfähigkeitswerte werden in S/cm bei $30^0$ gemessen. Die Messung selbst erfolgt nach der Methode von F. Beck, Berichte Bunsengesellschaft, physikalische Chemie 68, Seite 558 bis 567 (1964).

Nach dem Verfahren der Erfindung wird zunächst Dithienobenzol, das die folgende Struktur (I) hat, der elektrochemischen Oxidation unterworfen.

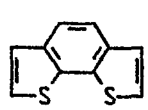 (I)

Die Herstellung des Dithienobenzol kann nach Verfahren erfolgen, wie sie beispielsweise in J.C.S. Perkin Trans II (1983) Seite 813 ff. beschrieben sind. Das Dithienobenzole wird in Gegenwart von Leitsalzen der elektrochemischen Oxidation unterworfen. Man versteht hierunter Salze, die als Anionen beispielsweise Verbindungen der Gruppe $BF_4^-$, $AsF_4^-$, $AsF_6^-$, $SbF_6^-$, $SbCl_6^-$, $PF_6^-$, $ClO_4^-$, $HSO_4^-$ und $SO_4^{2-}$ enthalten.

vG/P

Diese Salze enthalten als Kationen z.B. Lithium, Natrium, Kalium oder Ammonium. Die Verwendung von Verbindungen dieser Klasse ist bekannt und nicht Gegenstand der Erfindung. Man verwendet im allgemeinen die Verbindung in solcher Menge, daß auf 1 Mol Dithienobenzol zwischen 1 und 20 Mol-% des Leitsalzes entfallen.

Die elektrochemische Oxidation erfolgt zweckmäßig in Lösung, wobei als Lösungsmittel insbesondere polare organische Lösungsmittel in Frage kommen wie Dichlormethan Propylencarbonat Acetonitril oder Tetrahydrofuran. Man verwendet zweckmäßig Lösungen, die zwischen 1 und 20 Gew.% des Dithienobenzols enthalten. Die Oxidation erfolgt bei Stromdichten zwichen 0,1 bis 100 mAmp/cm2 und in einem Temperaturbereich zwischen -80 bis 100°, vorzugsweise zwischen +10 und +30°C.

Bei dem erfindungsgemäßen Verfahren werden einfache übliche elektrolytische Zellen oder Elektrolyseapparaturen, bestehend aus einer Zelle ohne Diafragma, und 2 Elektroden sowie einer externen Stromquelle verwendet. Die Elektroden können dabei beispielsweise aus Graphit oder Edelmetallen wie Platin bestehen. Es ist dabei günstig, wenn die Anode flächig ausgebildet ist. Außer den erwähnten einfachen elektrolytischen Zellen können auch Elektrolyseeinrichtungen Einsatz finden, beispielsweise Zellen mit Diafragma oder solche mit Referenzelektron zur exakten Potentialbestimmung.

Nach der elektrochemischen Oxidation werden Oxidationsprodukte erhalten, die entweder neutralradikalisch, radikalkationisch oder dikationisch sind. Diese Stoffe haben folgende Strukturen (II) beispielsweise:

IIa 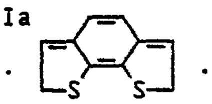 , IIb 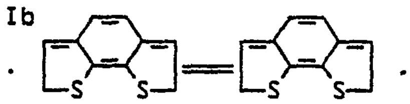 , IIc 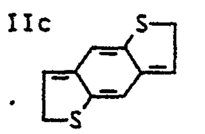 ,

IId 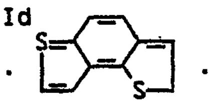 , IIe 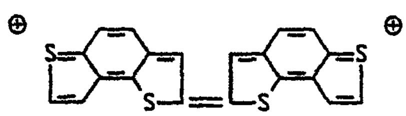 , IIf 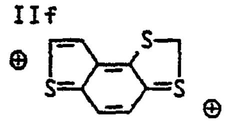

Diese Verbindungen bilden, soweit sie kationisch sind, mit den Anionen, die von den Leitsalzen herrühren, Salze.

Die Oxidationsprodukte der elektrochemischen Oxidation können in einem zweiten Schritt mit bestimmten Elektronendonatoren umgesetzt. Elektronendonatoren im Sinne der Erfindung sind Polyalkylbenzole, Naphthalin, Anthracen, Tetrathiafulvalen, Tetraselenafulvalen, Dibenzotetraselenafulvalen, Ethandiyliden-2,2'- bis -1,3-dithiol u.a.

Ebenso ist es möglich, durch Reaktion der Verbindung IIa - IId mit Elektronenacceptoren vorzugsweise Chloranil, Tetracyanoethylen oder Tetracyanochinon tieffarbige CT-Komplexe herzustellen (vgl. Beispiel 1 - 2).

Die Umsetzung der Oxidationsprodukte der ersten Stufe mit den Elektronendonatoren erfolgt zweckmäßig in Lösung, wobei als Lösungsmittel Acetonitril, Benzonitril oder Aceton oder auch Dimethylformamid, Tetrahydrofuran, Bernsteinsäuredinitril verwendet wird. Die Umsetzung erfolgt in einem Temperaturbereich von +20 bis +180°C und kann einen Zeitraum von 0,5 bis 20 Stunden in Anspruch nehmen.

Die erhaltenen CT-Komplexe sind tiefviolett bis grünschwarz gefärbt und haben eine Leitfähigkeit, die größer ist als $>10^{-2}$ S/cm. Die Komplexe sind relativ thermostabil und zeigen beim Erwärmen bis auf 100°C keine Veränderung der Leitfähigkeit. Die CT-Komplexe sind als Einkristalle in Längen von 6 - 8 mm herstellbar.

Die erfindungsgemäß hergestellten CT-Komplexe können daher vorteilhaft zur Herstellung von elektrischen Leitern und für Elektroden verwendet werden.

Beispiele

Nr. 1 1,9 Teile Dithienobenzol (vgl. Struktur IIa) werden mit der äquivalenten Menge Tetracyanochinondimethan (2,04 Teile) 1 Stunde bei 60°C erwärmt. Es bildet sich eine tiefgrüne Reaktionslösung, aus der sich beim Einengen schwarzgrüne Kristalle abscheiden. Nach dem Trocknen (4 h, 50°C, 10 Torr) zeigen die Kristalle eine elektrische Leitfähigkeit von 5 · 10-2 S/cm.

Nr. 2 Wird wie oben gearbeitet, aber mit Chloranil (2,46 Teile) statt des Tetracyanochinondimethans, so werden schwarze Kristallnadeln mit einer Leitfähigkeit von 7,5 · 10-2 S/cm erhalten.

Nr. 3 Die elektrochemische Polymerisation von Dithienobenzol (IIa). 0,54 Teile IIa werden in 100 Teilen Propylencarbonat gelöst und mit 1,5 Teilen Leitsalz Tetrabutylammoniumhexafluorphosphat versetzt. Mit einer Stromdichte von 3 mAmp/$cm^2$ wird 80' polymerisiert. Auf der Anode bildet sich ein Film, der nach dem Trocknen $3,5 \cdot 10^{-1}$ S/cm Leitfähigkeit aufweist. Versetzen des Films mit der äquivalenten Menge Anthracen (Molv. 1:1; 0,24 Teile/0,18 Teile) führt zu einem Komplex mit der Leitfähigkeit $8,5 \cdot 10^{-1}$ S/cm.

Nr. 4 Wird analog zu Beispiel 3 gearbeitet, jedoch die Verbindungen IIb, IIc sowie II d eingesetzt, so werden durch die elektrochemische Polymerisation Filme mit der folgenden Leitfähigkeit erhalten:

Mit IIb als Ausgangsmonomeren $1{,}5 \cdot 10^{-1}$ S/cm,
mit IIc als Ausgangsmonomeren $4{,}5 \cdot 10^{-2}$ S/cm,
mit IId als Ausgangsmonomeren $3 \cdot 10^{-2}$ S/cm,

Patentansprüche

1. Verfahren zur Herstellung von elektrisch leitfähigen Systemen, dadurch gekennzeichnet, daß man Dithienobenzol in Gegenwart von Leitsalzen der elektrochemischen Oxidation unterwirft und die Oxidationsprodukte mit Elektronendonatoren umsetzt.

2. Verwendung von elektrisch leitfähigen Systemen, hergestellt nach dem Verfahren nach Anspruch 1, zur Herstellung von elektrischen Leitern und von Elektroden.

i.A.